Europäisches Patentamt

European Patent Office

Office européen des brevets

(11) Numéro de publication: **0 471 620 B1**

(12) **FASCICULE DE BREVET EUROPEEN**

(45) Date de publication du fascicule du brevet: **02.11.95**  (51) Int. Cl.6: **C03B 23/03**, C03B 23/035

(21) Numéro de dépôt: **91402237.1**

(22) Date de dépôt: **13.08.91**

(54) **Procédé et dispositif de bombage de feuilles de verre.**

(30) Priorité: **17.08.90 DE 4026094**
**07.02.91 FR 9101362**

(43) Date de publication de la demande:
**19.02.92 Bulletin 92/08**

(45) Mention de la délivrance du brevet:
**02.11.95 Bulletin 95/44**

(84) Etats contractants désignés:
**BE CH DE ES FR GB IT LI LU SE**

(56) Documents cités:
**EP-A- 0 338 216**
**DE-C- 826 056**
**FR-A- 2 284 570**
**FR-A- 2 359 795**

(73) Titulaire: **SAINT-GOBAIN VITRAGE INTERNA-TIONAL**
**"Les Miroirs"**
**18, avenue d'Alsace**
**F-92400 Courbevoie (FR)**

(72) Inventeur: **Petitcollin, Jean-Marc**
**12, rue de Verdun,**
**Le Plessis Brion**
**F-60150 Thourotte (FR)**
Inventeur: **Lesage, Jean-Luc**
**16, Résidence Thaloss,**
**94, rue de Paris**
**F-60200 Compiegne (FR)**

(74) Mandataire: **Menes, Catherine et al**
**SAINT-GOBAIN RECHERCHE 39, Ouai Lucien Lefranc**
**F-93300 Aubervilliers (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

## Description

L'invention concerne les techniques de production de vitrages bombés et éventuellement trempés très généralement destinés à l'équipement de véhicules automobiles. Plus précisément l'invention vise celles de ces techniques dans lesquelles les feuilles de verre préchauffées dans un four de bombage sont amenées en position horizontale sous un élément supérieur, plaquées contre cet élément supérieur au moyen d'une force de nature pneumatique et après cette opération de transfert déposées sur un élément inférieur de bombage, les feuilles de verre bombées subissant ultérieurement un refroidissement contrôlé de préférence du type trempe thermique.

Pour préchauffer une feuille de verre en vue de son bombage, la technique la plus avantageuse financièrement et qualitativement est d'utiliser une enceinte de type tunnel que la feuille de verre traverse, dans le sens longitudinal, au moyen d'un convoyeur disposé horizontalement ou sensiblement horizontalement et le plus souvent constitué par un lit de rouleaux moteurs. A la sortie du four - et pour ne considérer que les techniques de bombage évoquées plus haut et faisant l'objet de la présente invention -la feuille de verre est immobilisée sous un élément supérieur qui participe à son transfert depuis le convoyeur horizontal vers un élément inférieur généralement du type cadre annulaire ouvert en son centre.

Ces techniques ont fait l'objet de nombreux perfectionnements dont on trouvera des exemples, notamment dans les publications de brevet FR-B-2 085 464, EP-B-3 391, EP-B-5 306, EP-B-169 770, EP-B-240 418, EP-B-241 355 auxquelles il est renvoyé pour plus de détails.

La déformation requise pour le bombage est obtenue de nombreuses façons qui se différencient notamment par les rôles respectifs des éléments inférieur et supérieur. Si la courbure visée est faible, l'élément supérieur peut être constitué par une simple plaque plane qui va relâcher la feuille de verre sur un cadre annulaire dont le pourtour définit la forme définitive du vitrage (EP-B-3 391, EP-B-240 418). Pour une courbure un peu plus prononcée, l'élément supérieur sera lui-même galbé afin au minimum de préformer la feuille de verre (FR-B-2 085 464, EP-B-169 770, EP-B-241 355), la feuille de verre finissant le cas échéant d'acquérir sa forme définitive sur l'élément inférieur. Dans les deux cas, cet élément inférieur fait également office de cadre-support lors de l'opération suivante de trempe.

Si on poursuit cette progression vers des formes de vitrages de plus en plus complexes, une opération de pressage s'avère nécessaire, le plus souvent réalisée au moyen d'un cadre spécifique de pressage, la feuille de verre étant transférée après bombage sur un cadre spécifique de trempe. Enfin, le cadre de pressage peut être constitué non par un simple rail continu mais par une série d'éléments articulés entre eux, le cadre en se refermant venant par exemple ramener les parties latérales de la feuille de verre en direction de la partie centrale. Par ailleurs, il doit être également signalé que cette sophistication est souvent accompagnée par la substitution du cadre inférieur de bombage par une forme pleine de pressage ou autre moyen équivalent destiné notamment à soutenir la partie centrale de la feuille de verre ; toutefois la maîtrise de la qualité optique est alors plus délicate aussi nous nous intéresserons par la suite plus particulièrement aux cas où l'élément inférieur est du type cadre ouvert en son centre.

Cette évolution vers des machines de bombage de plus en plus sophistiquées s'accompagne d'une diminution des cadences de production et surtout d'une augmentation des risques de dégradation de la qualité optique du vitrage, tout simplement car le nombre de manipulations subies par celui-ci s'accroît. De plus, quelle que soit la variante de réalisation choisie, un aspect déterminant du problème du bombage est la maîtrise de la température de la feuille de verre. Le comportement rhéologique du verre est bien connu et peut très schématiquement se résumer ainsi, à temps de déformation constant, plus un élément de surface est chaud, plus la déformation maximale susceptible d'être obtenue (sans introduire de contraintes qui entraîneraient la casse du vitrage) est grande ; corollairement, à déformation constante, plus ce même élément de surface est chaud et moindre est le temps nécessaire pour obtenir cette déformation.

En pratique ces deux facteurs, temps de déformation et "amplitude" de la déformation, interviennent l'un comme l'autre et il n'est pas souhaitable de trop priviligier l'un ou l'autre. En effet, prolonger le temps de déformation accroît fortement les risques de marquage inhérents à l'opération de bombage ; quant à l'amplitude de la déformation, elle est pour sa part gouvernée par la forme du vitrage que l'on cherche à réaliser.

Les auteurs de la présente invention ont constaté que le passage à une variante plus complexe est le plus souvent dû à ce que quelques éléments de la surface d'une feuille de verre ont un comportement inadapté du point de vue rhéologique, dû essentiellement à un chauffage inadapté, cet élément de surface étant par exemple à la même température que le reste de la feuille alors que l'on cherche à la déformer plus intensément.

Ce problème de la précision du chauffage des feuilles de verre a déjà été abordé par le passé. Dans le brevet US-A-4 441 907, il est par exemple décrit des brûleurs qui accompagnent la feuille de verre dans une partie de sa course dans le four de bombage, ces brûleurs étant dans ce but montés sur des chariots déplacés parallèlement à l'axe du four. Dans la demande EP-A-338 216, il a d'autre part été proposé d'équiper le four de résistances additionnelles déplacées transversalement d'une manière synchronisée avec le déplacement longitudinal de la feuille de verre de sorte que ces résistances chauffent précisément une ligne de bombage. Le défaut principal de ce type de chauffage localisé est qu'il est opéré relativement précocément d'où un risque d'homogénéisation au moins partielle de la température du vitrage par exemple lors du positionnement de la feuille de verre sous l'élément supérieur. De plus, l'intensité de la surchauffe doit être limitée si on veut exclure tout risque de déformation du vitrage.

Il a été également proposé par exemple dans le brevet JP-B-88 058 771 de marquer les lignes de bombage d'une feuille de verre au moyen d'une peinture ou autre agent endothermique qui s'élimine sans laisser de trace. Là encore, l'essentiel de la surchauffe est obtenu bien avant le bombage. De plus la mise en oeuvre de ce procédé nécessite un poste supplémentaire pour le pistolétage de l'agent endothermique.

A ces actions dans le four de bombage peuvent s'ajouter ou se substituer des actions dans la cellule de bombage même. Le document FR-A-2 359 795 décrit un procédé de bombage combinant des forces d'inertie et de gravité, la feuille de verre étant soulevée par un organe primaire. Un chauffage par lampes de quartz à filaments orienté le long de lignes sur la face supérieure de la feuille commence lorsque celle-ci est correctement positionnées dans la cellule de bombage.

Le document DE-C-826 056 décrit un procédé de formage de verres de montres. Ce procédé consiste à poser la feuille de verre sur un moule sur lequel elle repose par ses bords, l'ensemble étant porté à une température convenable pour bomber le verre par aspiration. Le verre est ensuite transféré par une ventouse dont le contact refroidit la partie centrale du verre alors que les bords sont réchauffés par une rampe à gaz annulaire en vue d'un pressage final.

Des demandes de brevet FR-A-2 284 570 et FR-A-2 315 486, il est également connu d'équiper les organes de compression d'une presse de bombage de feuilles de verre d'un certain nombre de brûleurs destinés à compenser le refroidissement de la feuille de verre qui se produit lorsque la presse est disposée à l'air libre, ces brûleurs agissant plus spécialement dans les régions où ce refroidissement est particulièrement intense en raison par exemple de la présence d'orifices traversants.

Mais la technique proposée ne permet pas une réelle localisation de la chauffe par exemple le long d'une ligne de pliage ne serait-ce que parce que les brûleurs sont en action avant même que la feuille de verre ne se soit arrêtée sous l'élément supérieur. D'autre part, compte tenu de ce que les feuilles de verre ne séjournent que très brièvement entre lesdits organes de compression, le procédé est surtout adapté au maintien d'une ambiance chaude, ambiance chaude qui dans les techniques de bombage faisant l'objet de l'invention est obtenue simplement par la disposition des outils de bombage dans le four même ou une dépendance de celui-ci. Enfin, les brûleurs proposés ne peuvent être montés en raison des risques d'incendie dans une cellule de bombage elle-même à la température de bombage.

En dehors de ces différentes actions de chauffage plus ou moins localisées, on connaît également des installations de bombage avec une assistance au formage dans les zones les plus difficiles à cambrer correctement, assistance réalisée au moyen de jets gazeux ponctuels qui exercent sur la feuille de verre, une force d'appoint à la force principale d'application de la feuille de verre localement -notamment sur les bords - défaillante (EP-B-5 306 ou EP-298 426). Pour éviter la formation de défauts optiques, ces jets gazeux sont chauffés à une température sensiblement identique à celle de la feuille de verre à son entrée dans la cellule de bombage. Mais dans ce cas, le chauffage du gaz est donc réalisé uniquement pour éviter justement toute action thermique sur la feuille de verre et après que la feuille de verre ait été déposée sur l'élément inférieur, les zones d'impact de ces jets n'ont donc pas un potentiel de déformation supérieur à celui des zones environnantes.

Les auteurs de la présente invention se sont placés d'un point de vue radicalement opposé en cherchant à bomber ces zones délicates non en exerçant une pression plus grande mais en augmentant localement la viscosité du verre, cette localisation devant être aussi fine que possible.

Pour cela, il est proposé selon l'invention un procédé de bombage d'une feuille de verre préchauffée à température de bombage, amenée en position horizontale sous un élément supérieur, mise au contact dudit élément supérieur au moyen d'une force de nature pneumatique puis déposée sur un élément inférieur de bombage, un gaz dont la température est sensiblement supérieure à la température de bombage étant soufflé en direction de certains éléments de surface de la face inférieure de la feuille de verre, le soufflage débutant alors que la feuille de verre est au contact de l'élément supérieur et avantageusement n'excédant généralement pas 5 secondes.

Comme il ressort de la définition de l'invention donnée ci-dessus, la feuille de verre est préalablement chauffée à température de bombage, c'est-à-dire à une température convenant pour l'ensemble de la feuille de verre mais insuffisante pour quelques éléments de surface bien localisés. Ce chauffage de base porte ainsi la température du verre à environ 500°C si le bombage n'est pas suivi d'une trempe thermique et à 620-650°C dans le cas contraire. Il permet d'éviter que le soufflage de gaz à haute température n'ait une quelconque influence négative sur le verre notamment ne conduise à des déformations parasites.

Par haute température, on entend au sens de l'invention une température qui excède la température de base du verre d'au moins 100°C et de préférence de l'ordre de 200°C, le débit et la pression de soufflage étant réglés de manière à obtenir une élévation de température des éléments de surface de la feuille de verre concernés par exemple de l'ordre de 10°C pour une durée de soufflage de 5 secondes ce qui compte tenu de la gamme des températures ici envisagées, signifie une fluidité du verre deux fois plus grande au niveau de ces éléments de surface. L'invention permet donc des actions très sensibles avec des durées de traitement brèves et compatibles avec le temps de positionnement de l'élément inférieur sous l'élément supérieur de sorte que cette opération s'intègre parfaitement dans la logique du procédé de bombage. En opérant sur une feuille de verre en position de référence, on peut de plus aisément localiser ce soufflage.

Très généralement, l'invention s'applique à tous les procédés de bombage en position horizontale dans lesquels la feuille de verre est transférée du convoyeur la véhiculant dans le four de bombage à un élément inférieur au moyen d'un élément supérieur placé dans une zone chaude, soit dans le four lui-même soit dans une station de bombage saisant suite au four et dans laquelle est maintenue une ambiance chaude, avec une température sensiblement égale à la température de bombage du verre.

Citons plus particulièrement comme exemple, les procédés de bombage dans lesquels la feuille de verre est aspirée par un élément de préhension puis laissée tomber sur un cadre de bombage (EP-A-3 391 et EP-A-240 418), ceux où la feuille de verre est aspirée et préformée par un élément de préhension en forme (FR-A-2 085 464, EP-A-240 355) puis relâchée ou pressée au moyen d'un cadre annulaire ou encore ceux où la feuille de verre est soulevée au moyen d'un courant gazeux ascendant chaud qui la presse contre un élément supérieur en forme puis est soumise éventuellement à un pressage mécanique et bien sûr toutes les variantes ou combinaisons bien connues de l'art de ces procédés de base.

Autre avantage du procédé de chauffage localisé selon l'invention, il agit sur la face inférieure de la feuille de verre ce qui est difficilement réalisable dans le four de bombage où la feuille de verre est généralement véhiculée par des rouleaux moteurs qui pourraient être endommagés par les brûleurs ou les autres moyens de surchauffage et où surtout une surchauffe de la face inférieure entraînerait une sensibilisation accrue de cette face aux frottements sur les rouleaux et à une déformation par ondulation. Néanmoins, les problèmes liés à la cuisson des émaux, servant à la réalisation de décors et/ou de bandes d'encadrement, font que l'élément supérieur a généralement une forme courbe à concavité tournée vers le haut de sorte que le côté convexe du vitrage correspond à sa face inférieure. Or la déformation par extension est généralement plus critique que la déformation par écrasement subie par le côté concave et demande donc une température plus élevée.

Un autre aspect avantageux du procédé selon l'invention est que la quantité totale de chaleur apportée à la feuille de verre peut même être réduite car cette quantité est exactement apportée aux endroits voulus. Paradoxalement, ceci permet de travailler avec une feuille de verre relativement froide, rappelons que la variation de la viscosité du verre est très rapide dans les gammes de températures ici considérées et que la notion de chaud ou froid qui en découle joue à quelques degrés près. Un verre froid est synonyme d'une plus grande qualité optique et d'une meilleure courbure, la partie centrale de la feuille de verre non soutenue par le cadre annulaire avant le refroidissement par trempe thermique ayant une moindre tendance à se déformer sous l'effet de son propre poids. D'autre part, les éventuelles portions émaillées du vitrage sont toujours du côté concave du vitrage (tournée vers l'intérieur du véhicule après montage) et ne risquent donc pas d'être endommagées par ce soufflage de gaz très chaud sur la face opposée.

De préférence, le soufflage est effectué avec une pression et un débit qui ne permettent pas de soulever la feuille de verre et/ou d'exercer simplement une force significative sur celle-ci. Typiquement, le soufflage sera effectué avec une pression inférieure à 500 Pa par mètre carré de surface à surchauffer. De ce fait, il est plus particulièrement avantageux d'opérer avec des gaz très chauds, par exemple à plus de 950°C, ce qui permet de maintenir des débits assez faibles. Dans ce cas, le soufflage ne conduit pas à un effet de pressage pneumatique, mais a bien une action purement thermique avec un chauffage par convection forcé. En conséquence de quoi, le procédé selon l'invention peut être utilisé sans aucun risque de marquage de la feuille qui n'appuie pas de manière préférentielle sur certaines zones de l'élément supérieur.

Très généralement, le procédé selon l'invention permet d'améliorer le préformage qui se produit au contact de l'élément supérieur, par exemple en poussant celui-ci suffissamment loin pour ne pas rendre nécessaire un complément par pressage au moyen d'un cadre annulaire de sorte que pour des courbures moyennes (typiquement pour des vitrages dont le plus petit rayon de courbure n'est pas inférieur à 1 m encore que ces limites s'apprécient également en fonction d'autres critères que les rayons de courbure, notamment la taille du volume, l'emplacement et le nombre des pliures, on va pouvoir procéder directement avec un élément inférieur venant récupérer, après son larguage, la feuille de verre préformée au contact de l'élément supérieur et la supportant pendant l'opération suivante de trempe. Il a été en effet constaté que dans le cas où la feuille de verre est aspirée pour être transférée du convoyeur horizontal à l'élément supérieur en forme - que cette aspiration soit effectuée au travers de l'élément supérieur lui-même ou à la périphérie de celui-ci - le soufflage selon l'invention permet en quelque sorte de rendre cette aspiration plus efficace en améliorant les possibilités qu'à la feuille de verre d'épouser la forme de l'élément supérieur, le préformage au contact de l'élément supérieur. A noter que l'invention peut être également utilisée même en l'absence d'un préformage sur l'élément supérieur.

Un cas particulièrement avantageux est celui des vitrages très fortement bombés qui nécessitent ordinairement l'utilisation d'un élément inférieur du type cadre de pressage fait de plusieurs pièces articulées entre elles, cadres bien sûr plus onéreux que les cadres monorails, mais surtout qui compliquent beaucoup le dispositif car il faut prévoir des moyens par exemple du type vérin pour faire jouer les pièces articulées. En procédant selon l'invention, il a été ainsi possible d'obtenir des vitrages dont le plus petit rayon de courbure est de 50 mm avec un cadre non articulé alors que la limite inférieure des cadres monorails est normalement de 80 mm.

Comme indiqué précédemment, le surchauffage permet d'augmenter la fluidité du verre d'une manière très importante. Mais il peut être ajouté que les temps de relaxation sont eux diviser dans les mêmes proportions ce qui n'est pas le cas lors d'un pressage pneumatique qui ne modifie par les caractéristiques intrinsèques de la feuille de verre. Ce point est tout particulièrement important dans le cas des courbures très prononcées où, pour ne pas obtenir de vitrages présentant des contraintes maximales susceptibles d'entraîner très rapidement sa casse, il est nécessaire soit de procéder lentement, soit de laisser le cadre de pressage en position pendant un certain temps après la mise en forme proprement dite, l'objectif commun étant de laisser se relaxer les contraintes. En procédant selon l'invention, il est possible de raccourcir les temps de cycles ce qui est non seulement avantageux du point de vue des cadences de production mais aussi permet de réduire les empreintes que peuvent éventuellement laisser des outils en contact prolongé avec la feuille de verre.

L'invention a également pour objet un dispositif de bombage d'une feuille de verre comportant au moins un four de bombage, un convoyeur horizontal, une station de bombage isotherme avec le four et qui comporte un élément supérieur placé au-dessus dudit convoyeur des moyens générant une force de nature pneumatique assurant le transfert au contact de l'élément supérieur et un élément inférieur venant récupérer la feuille de verre après qu'elle ait été transférée au contact dudit élément supérieur, ladite station de bombage comportant également des moyens de chauffage par convection forcée tournés vers la face inférieure de la feuille de verre, positionnés de façon à ce que le soufflage débute alors que la feuille est au contact de l'élément supérieur, des moyens pour porter les gaz à une température supérieure à la température de bombage et des moyens pour diriger les gaz en direction de certains éléments de surface de la face inférieure de la feuille de verre.

Les moyens de chauffage selon l'invention sont de préférence - du moins pour ce qui concerne directement les parties soufflant les gaz en direction du verre - montés sur le chariot portant l'élément inférieur ce qui assure un bon positionnement donc une localisation optimale de la chauffe.

Par moyens de chauffage par convection forcée, on entend par exemple des buses, rampes percées d'orifices multiples ou de fentes ou encore des caissons de soufflage, ces éléments soufflant un air ou des fumées dont la température a été portée à par exemple plus de 800°C. Pour cela, il peut avantageusement être fait emploi d'air comprimé préchauffé par un passage dans le four de bombage et amené à la température idoine par un passage au travers d'un petit four électrique très chaud par exemple, à plus de 1000°C. Des fumées d'un brûleur monté hors de la station de bombage et accélérées par un dispositif du type trompe-venturi ou autre ventilateur peuvent être également utilisées.

Dans une variante de l'invention, ces moyens de chauffage par convection forcée sont par exemple des brûleurs à flammes molles disposés à quelques centimètres seulement de la face inférieure, par exemple à environ 5 cm. De préférence, le brûleur est alimenté en un mélange acétylénique du type air-acétylène ou oxygène-acétylène. On sait en effet que de tels mélanges permettent l'obtention des températures de flammes très élevées, notamment si on les compare avec celles obtenues avec tous les autres hydrocarbures notamment avec du gaz naturel, du méthane ou du propane. (température de flamme pour le mélange oxygène-acétylène : 3160°C). Dans la mesure où la feuille de verre se présente à la flamme avec une température supérieure à sa température de déformation plastique et de préférence supérieure à 620°C, l'action du gaz chaud n'est pas préjudiciable à la qualité optique de la feuille de verre et ne conduit notamment pas à des déformations de la surface.

Très chauds, les mélanges acétyléniques permettent notamment de réduire encore le temps de ce chauffage additionnel qui peut être par exemple limité à 1 ou 2 secondes.

Cette variante de réalisation de l'invention s'accomode tout particulièrement d'un montage des brûleurs sur le chariot portant l'élément inférieur dans la mesure où l'élément inférieur ne séjourne pas de façon continue dans le poste de bombage chaud et peut être refroidi lors de son passage dans le poste de trempe ou encore lorsqu'il est en position d'attente, généralement hors du four donc dans un espace non chauffé. En effet, on sait que l'acétylène se décompose pour une température de plus de 300°C ce qui peut poser des problèmes dans le cas d'un positionnement permanent dans le poste de bombage. Mais il est à noter qu'un tel positionnement permanent n'est pas obligatoirement exclu à la condition de prévoir des moyens d'isolation des conduites de gaz.

D'autres détails et caractéristiques avantageuses de l'invention ressortent de la description faite ci-après en référence aux dessins annexés qui représentent :

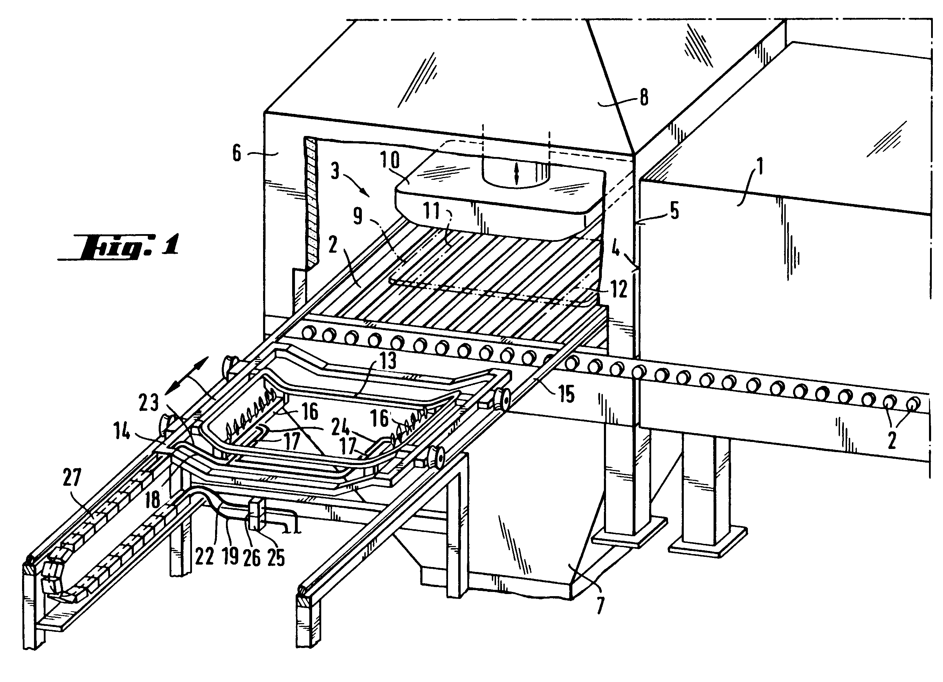

. **figure 1** : une installation de bombage de la feuille de verre avec des brûleurs à gaz montés sur le chariot portant l'élément inférieur,

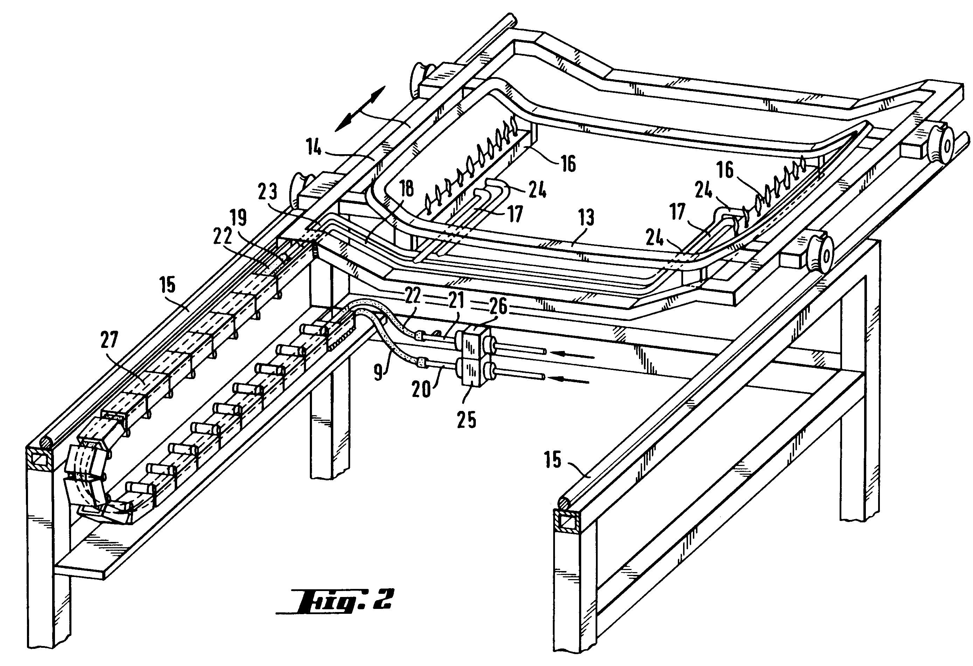

. **figure 2** : une vue à plus grande échelle du chariot représenté figure 1.

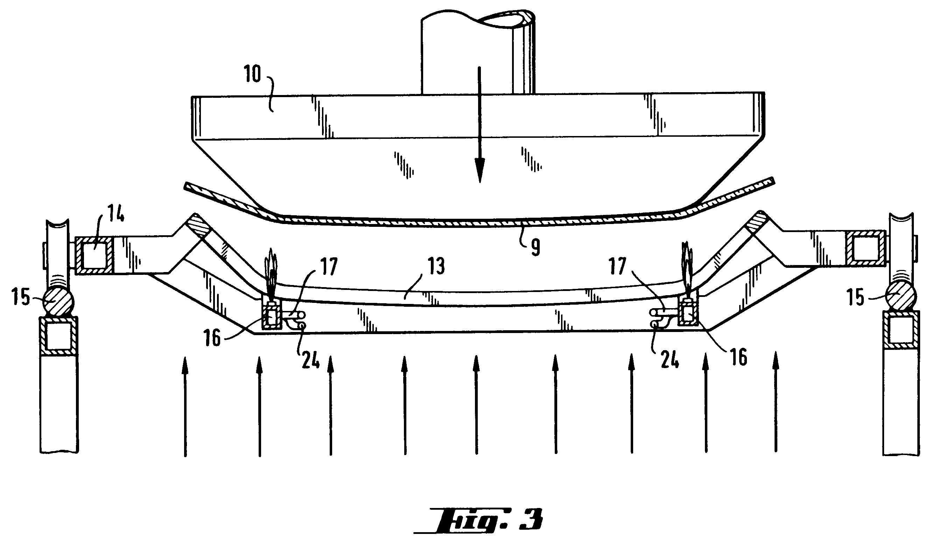

. **figure 3** : une presse de bombage composée d'une forme de bombage supérieure et d'un cadre annulaire, vue à l'instant précédant le processus de pressage.

Nous allons maintenant décrire un mode détaillé de réalisation de l'invention ici appliquée à une installation de bombage conforme aux enseignements de EP-B-169 770, c'est-à-dire dans laquelle le transfert de la feuille de verre du convoyeur horizontal où l'élément supérieur est obtenu au moyen d'un courant gazeux chaud ascendant. Toutefois, il est clair que l'invention est nullement limitée à ce type de transfert et qu'elle s'applique notamment aux procédés de bombage comportant une phase d'aspiration de la feuille de verre soit directement au travers de l'élément supérieur soit à la périphérie de la feuille de verre.

L'installation de bombage visible à la figure 1 comporte un four du type tunnel 1 dans lequel les feuilles de verre sont véhiculées par un convoyeur horizontal constitué par des rouleaux moteurs 2. Ce convoyeur débouche dans une station de bombage 3, des ouvertures adéquates étant ménagées dans les parois 4 et 5 appartenant respectivement au four 1 et à la station de bombage 3. Cette dernière est par ailleurs limitée latéralement par une paroi 6, la station de bombage devant être de préférence isotherme avec l'extrémité atténante du four, la température y régnant étant typiquement de l'ordre de 550-650°C et de préférence d'au moins 620°C, température convenant pour un bombage du verre. La station de bombage 3 est dite à sortie latérale, les feuilles de verre étant évacuées après bombage par une ouverture pratiquée dans la paroi opposée à la paroi 6.

La station de bombage 3 est en fait incorporée dans une cheminée avec des conduits inférieur 7 et supérieur 8, un courant gazeux ascendant chaud pouvant être émis par le conduit 7 et récupéré par le conduit 8 dans un circuit fermé. Cette station de bombage comporte un élément supérieur constitué par une forme de bombage mâle pleine 10, actionnée par un dispositif de montée-baisse. Dès que la feuille de verre est correctement positionnée par rapport à la forme de bombage 10, opération qui est simplifiée par la mise en route dès cet instant du ventilateur générant le courant gazeux ascendant, mais avec un niveau de pression faible, juste suffisant pour délester les rouleaux 2 d'une partie du poids de la feuille de verre 9 et limiter ainsi son frottement sur lesdits rouleaux.

Dans le cas ici représenté, la partie centrale de la feuille de verre 9 n'a pas à être bombée mais ces ailes latérales doivent être repliées autour de deux axes de pliure 11, 12 ici parallèles aux rouleaux 2. Pour un tel bombage, avec un rayon de courbure relativement petit, il est ordinairement nécessaire d'employer une forme inférieure du type cadre articulé, sinon les parties extrêmes du cadre qui sont elles très recourbées viennent buter non sur le pourtour du vitrage mais dans les zones marginales où elles créent des défauts optiques. Ce phénomène de marquage peut être éviter selon l'invention en améliorant le préformage à l'aide de la forme mâle de sorte que les ailes du vitrage soient déjà partiellement repliées au moment où l'élément inférieur est mis en contact avec la feuille de verre.

Dans l'exemple ici représenté, le cadre annulaire 13, visible de manière plus détaillée figure 3, est simplement constitué par un mono-rail continu définissant un pourtour de forme correspondante à celle de la forme de bombage 10. Ce cadre 13 est porté par un chariot 14 qui pénètre dans la station de bombage au moyen de rails 15 montés parallèlement aux rouleaux 2 du convoyeur.

Le chariot 14 est équipé de brûleurs 16 qui sont situés juste sous les lignes de pliure 11 et 12 lorsque le chariot est en position sous l'élément supérieur. Ces brûleurs 16 sont ici du type rampes à gaz et sont alimentés en gaz combustible, de préférence du type acétylène, par des conduites 17, 18 et un flexible 19 connecté à une canalisation 20. Le gaz comburant, air ou de préférence oxygène pur, est de même acheminé au travers d'une canalisation 21, d'un flexible 22 et de conduites 23 et 24. Les débits respectifs en combustible et comburant sont réglés par des clapets 25 et 26.

Les flexibles 19 et 22 sont de préférence guidés par une chaine en forme de chenille 27 qui les protège lors des mouvements du chariot dans et hors de la station de bombage. Eventuellement ces chenilles peuvent être formées par des éléments isolants thermiques même si ceux-ci ne sont pas obligatoires le chariot ne séjournant que très brièvement dans la station de bombage.

La figure 3 illustre le processus de bombage selon l'invention. La forme supérieure de bombage 10 a été abaissée et l'action du courant gazeux ascendant a eu pour conséquence le transfert de la feuille de verre 9 au contact de la forme 10. Comme on peut le voir sur cette figure, les parties latérales de la feuille de verre sont très peu repliées. On introduit alors le chariot 14 portant le cadre 13, les brûleurs 16 soufflant alors du gaz chaud très précisément en regard des lignes de pliures 11 et 12 de sorte que la viscosité du verre augmente localement et que l'action du courant gazeux ascendant suffit à obtenir un plaquage au moins partiel des ailes. L'étape suivante ici non représentée, à savoir le pressage au moyen du cadre annulaire n'est donc plus destinée qu'à parfaire le pressage et peut être quasi instantanée, sans risquer de dégrader la qualité du vitrage.

Après le pressage, le chariot 14 est conduit par les rails 15 hors de la station de bombage 3 et la feuille de verre est récupérée par un cadre de trempe ici non représenté et monté sur un chariot roulant sur des rails parallèles aux rails 15. La feuille de verre est ainsi conduite vers le poste de trempe.

L'intensité de la surchauffe localisée dépend bien sûr de la température du gaz soufflé mais aussi de son débit et de sa pression. Le tableau suivant indiquent les valeurs correspondant à une élévation de 10°C pour un soufflage d'air chaud pendant 5 secondes, les valeurs étant calculées pour une surface surchauffée de 1 m² de verre (verre float de 3 mm).

| Température des gaz | Pression (Pa) | Débit (m³/heure) | Quantité d'air soufflé en 5 s (m³) |
|---|---|---|---|
| 850°C | 676 | 9700 | 13,4 |
| 900°C | 450 | 7800 | 10,8 |
| 950°C | 330 | 6600 | 9,2 |
| 1000°C | 235 | 5600 | 7,8 |

Il ressort des chiffres précédents que de l'air à plus de 950°C, selon une pression inférieure à 350 Pa - qui ne peut donc entraîner le décollage de la feuille de verre, permet de surchauffer la feuille de verre avec des quantités d'air très réduites (par exemple de moins de 4 m³ en supposant que la surchauffe concerne une surface de l'ordre de 0,5 m²).

**Revendications**

1.  Procédé de bombage d'une feuille de verre (9) préchauffée à température de bombage, amenée en position horizontale sous un élément supérieur (10), mise au contact dudit élément supérieur (10), au moyen d'une force de nature pneumatique, puis déposée sur un élément inférieur de bombage (13), **caractérisé par** le soufflage d'un gaz dont la température est supérieure à la température de bombage en direction de certains éléments de surface (11, 12) de la face inférieure de la feuille de verre (9), ledit soufflage débutant alors que la feuille de verre (9) est au contact de l'élément supérieur (10).

2.  Procédé de bombage d'une feuille de verre selon la revendication 1, **caractérisé en ce que** la durée du soufflage est inférieure à 5 secondes.

3.  Procédé de bombage d'une feuille de verre selon la revendication 1 ou 2, **caractérisé en ce que** le produit de la pression de soufflage et du débit dudit gaz chaud est inférieur à 350 Pa.

4.  Procédé selon l'une des revendications précédentes, **caractérisé en ce que** la température dudit gaz est supérieure d'au moins 150°C à la température de bombage.

5.  Procédé selon la revendication 4, **caractérisé en ce que** la température dudit gaz est supérieure à 950°C.

EP 0 471 620 B1

**6.** Procédé de bombage d'une feuille de verre selon l'une des revendications précédentes, **caractérisé en ce que** la feuille de verre (9) est préchauffée uniformément à une température supérieure à 620°C.

**7.** Procédé de bombage d'une feuille de verre selon l'une des revendications 1 à 3, **caractérisé en ce que** la durée du soufflage conduit à une surchauffe d'au moins 10°C des éléments de surface vers lesquels les gaz sont dirigés.

**8.** Dispositif de bombage d'une feuille de verre (9) comportant un four de bombage (1), un convoyeur horizontal (2), une station de bombage (3) dont l'atmosphère est à la température de bombage et qui comporte un élément supérieur (10) placé au-dessus dudit convoyeur, des moyens générant une force de nature pneumatique assurant le transfert au contact de l'élément supérieur (10), et un élément inférieur (13) venant récupérer la feuille de verre après qu'elle ait été transférée au contact dudit élément supérieur, **caractérisé par** des moyens (16) de chauffage par convection forcée tournés vers la face inférieure de la feuille de verre et positionnés de telle façon que le soufflage débute alors que la feuille (9) est au contact de l'élément supérieur (10), **par** des moyens pour porter les gaz à une température supérieure à la température de bombage et **par** des moyens pour diriger les gaz en direction de certains éléments de surface de la face inférieure de la feuille de verre (9).

**9.** Dispositif de bombage d'une feuille de verre selon la revendication 8, **caractérisé en ce que** lesdits moyens (16) de chauffage par convection forcée sont portés par le chariot (14) transportant l'élément inférieur (13).

**10.** Dispositif de bombage d'une feuille de verre selon l'une des revendications 8 à 9, **caractérisé en ce que** lesdits moyens (16) de chauffage sont constitués par des buses, des rampes percées ou à fentes ou des caissons de soufflage.

**11.** Dispositif de bombage selon la revendication 10, **caractérisé en ce que** lesdits moyens (16) de chauffage sont alimentés par de l'air comprimé préchauffé dans le four de bombage (1) puis amené à la température de travail par passage dans un four électrique.

**12.** Dispositif de bombage selon la revendication 10, **caractérisé en ce que** lesdits moyens (16) de chauffage sont alimentés par des fumées obtenues par des brûleurs montés à l'extérieur de la station de bombage et accélérées par un ventilateur.

**13.** Dispositif de bombage selon la revendication 8 ou 9, **caractérisé en ce que** lesdits moyens (16) de chauffage sont constitués par des brûleurs acétyléniques.

## Claims

**1.** Method of bending a glass sheet (9) preheated to bending temperature, the sheet being brought in a horizontal position beneath an upper element (10), brought into contact with said upper element (10) by means of a force of pneumatic nature, then deposited on a lower bending element (13), characterized by the blowing of a gas having a temperature higher than the bending temperature towards certain surface elements (11, 12) of the lower face of the glass sheet (9), said blowing commencing while the glass sheet (9) is in contact with the upper element (10).

**2.** Method of bending a glass sheet according to Claim 1, characterized in that the duration of blowing is less than 5 seconds.

**3.** Method of bending a glass sheet according to Claim 1 or 2, characterized in that the product of the blowing pressure and of the flow rate of said hot gas is less than 350 Pa.

**4.** Method according to one of the preceding Claims, characterized in that the temperature of said gas is greater by at least 150°C than the bending temperature.

**5.** Method according to Claim 4, characterized in that the temperature of said gas is higher than 950°C.

8

6. Method of bending a glass sheet according to one of the preceding Claims, characterized in that the glass sheet (9) is preheated uniformly to a temperature higher than 620°C.

7. Method of bending a glass sheet according to one of Claims 1 to 3, characterized in that the duration of blowing results in an additional heating of at least 10°C of the surface elements towards which the gases are directed.

8. Device for bending a glass sheet (9), comprising a bending furnace (1), a horizontal conveyor (2), a bending station (3), the atmosphere of which is at the bending temperature and which comprises an upper element (10) situated above said conveyor, means creating a force of pneumatic nature assuring the transfer into contact with the upper element (10), and a lower element (13) that recovers the glass sheet after it has been transferred into contact with said upper element, characterized by means (16) for heating by forced convection directed towards the lower face of the glass sheet and positioned in such a manner that the blowing commences while the glass sheet (9) is in contact with the upper element (10), by means for raising the gases to a temperature higher than the bending temperature and by means for directing the gases towards certain surface elements of the lower face of the glass sheet (9).

9. Device for bending a glass sheet according to Claim 8, characterized in that said means (16) for heating by forced convection are carried by the carriage (14) transporting the lower element (13).

10. Device for bending a glass sheet according to one of Claims 8 to 9, characterized in that said heating means (16) are constituted of nozzles, perforated or slit nozzle pipes or blowing boxes.

11. Bending device according to Claim 10, characterized in that said heating means (16) are supplied with compressed air preheated in the bending furnace (1) and then brought to the operating temperature by passing through an electrical furnace.

12. Bending device according to Claim 10, characterized in that said heating means (16) are supplied with smoke gases produced by burners mounted outside the bending station and accelerated by a blower.

13. Bending device according to Claim 8 or 9, characterized in that said heating means (16) are constituted of acetylene burners.

## Patentansprüche

1. Verfahren zum Biegen einer auf Biegetemperatur erhitzten Glasscheibe (9), die in eine horizontale Position unter ein oberes Element (10) transportiert, mit diesem durch eine pneumatisch wirkende Kraft in Berührung gebracht und anschließend auf ein unteres Biegeelement (13) abgelegt wird, **dadurch gekennzeichnet, daß** ein Gas, dessen Temperatur höher als die Biegetemperatur ist, in Richtung bestimmter Oberflächenteile (11, 12) der Unterseite der Glasscheibe (9) geblasen wird, wobei dieser Blasvorgang beginnt, wenn sich die Glasscheibe (9) mit dem oberen Element (10) in Berührung befindet.

2. Verfahren zum Biegen einer Glasscheibe nach Anspruch 1, **dadurch gekennzeichnet, daß** die Blasdauer weniger als 5 Sekunden beträgt.

3. Verfahren zum Biegen einer Glasscheibe nach Anspruch 1 oder 2, **dadurch gekennzeichnet, daß** das Produkt aus Blasdruck und Durchsatz des Heißgases weniger als 350 Pa beträgt.

4. Verfahren nach einem der vorhergehenden Ansprüche, **dadurch gekennzeichnet, daß** die Temperatur des Gases wenigstens um 150 °C über der Biegetemperatur liegt.

5. Verfahren nach Anspruch 4, **dadurch gekennzeichnet, daß** die Temperatur des Gases über 950 °C liegt.

6. Verfahren zum Biegen einer Glasscheibe nach einem der vorhergehenden Ansprüche, **dadurch gekennzeichnet, daß** die Glasscheibe (9) einheitlich auf eine Temperatur von über 620 °C erhitzt ist.

9

7. Verfahren zum Biegen einer Glasscheibe nach einem der Ansprüche 1 bis 3, **dadurch gekennzeichnet, daß** die Blasdauer zu einer Überhitzung der Oberflächenteile, auf welche das Gas gerichtet ist, um wenigstens 10 °C führt.

8. Vorrichtung zum Biegen einer Glasscheibe (9), umfassend einen Biegeofen (1), einen horizontalen Förderer (2) und eine Biegestation (3), deren Atmosphäre sich auf Biegetemperatur befindet und die ein über diesem Förderer angeordnetes oberes Element (10), eine Einrichtung zur Erzeugung einer pneumatisch wirkende Kraft, die für die Überführung bis zur Berührung mit dem oberen Element (10) sorgt, und ein unteres Element (13) enthält, das die Glasscheibe wieder aufnimmt, nachdem sie mit diesem oberen Element in Berührung gebracht worden ist, **gekennzeichnet durch** eine Beheizungseinrichtung (16) mit Zwangsumlauf, die auf die Unterseite der Glasscheibe gerichtet und derart angebracht ist, daß der Blasvorgang beginnt, wenn sich die Glasscheibe (9) mit dem oberen Element (10) in Berührung befindet, **durch** eine Einrichtung, um das Gas auf eine Temperatur oberhalb der Biegetemperatur zu bringen, **und durch** eine Einrichtung zur Leitung des Gases in Richtung bestimmter Oberflächenteile der Unterseite der Glasscheibe (9).

9. Vorrichtung zum Biegen einer Glasscheibe nach Anspruch 8, **dadurch gekennzeichnet, daß** die Beheizungseinrichtung (16) mit Zwangsumlauf von dem Wagen (14) getragen ist, der das untere Element (13) transportiert.

10. Vorrichtung zum Biegen einer Glasscheibe nach Anspruch 8 oder 9, **dadurch gekennzeichnet, daß** die Beheizungseinrichtung (16) aus Düsen, mit Bohrungen oder Schlitzen versehenen Düsenrohren oder Blaskästen gebildet ist.

11. Biegevorrichtung nach Anspruch 10, **dadurch gekennzeichnet, daß** die Beheizungseinrichtung (16) mit Druckluft versorgt wird, die im Biegeofen (1) vorerhitzt und anschließend mittels Durchströmen eines Elektroofens auf Betriebstemperatur gebracht worden ist.

12. Biegevorrichtung nach Anspruch 10, **dadurch gekennzeichnet, daß** die Beheizungseinrichtung (16) mit Rauchgas versorgt wird, das durch außerhalb der Biegestation angebrachte Brenner hergestellt und von einem Gebläse beschleunigt wird.

13. Biegevorrichtung nach Anspruch 8 oder 9, **dadurch gekennzeichnet, daß** die Beheizungseinrichtung (16) aus Acetylenbrennern gebildet ist.

Fig. 1

Fig. 2

Fig. 3